# FASCICULE DE BREVET EUROPEEN

(11) **EP 3 327 298 B1**
(45) Date de publication et mention de la délivrance du brevet: **15.09.2021**
(21) Numéro de dépôt: 17203335.9
(22) Date de dépôt: 23.11.2017
(51) Int. Cl.: F16B 5/06, B60R 13/02, F16B 21/02

(54) **PIÈCE D'HABILLAGE ET ORGANE DE VERROUILLAGE**
VERKLEIDUNGSELEMENT UND VERRIEGELUNGSORGAN
COVERING PIECE AND LOCKING MEMBER

(30) Priorité: 23.11.2016 FR 1661405
(43) Date de publication de la demande: 30.05.2018
(73) Titulaire: NOVARES France, 92140 Clamart (FR)
(72) Inventeur: CHENAUD, David, 01100 BELLIGNAT (FR); PERRIN, Raphaël, 01430 VIEU D'IZENAVE (FR)
(74) Mandataire: Germain Maureau

(56) Documents cités:
- WO-A1-2008/104407
- WO-A1-2015/160500
- DE-U1- 20 221 448
- DE-U1- 20 221 448
- FR-A1- 2 457 404
- FR-A1- 2 793 199
- FR-A1- 2 898 161
- JP-A- 2010 180 931

## Description

La présente invention concerne un élément de fixation et une pièce enjoliveur utilisant cet élément de fixation.

Les véhicules automobiles possèdent une structure généralement métallique ou plus rarement composite et, pour des raisons de choix stylistique, on peut avoir recours à des pièces d'habillage qui viennent recouvrir des pièces de structure.

C'est notamment le cas des montants d'un véhicule qui sont classiquement pourvus d'une pièce d'habillage qui assure une continuité de style de la partie haute du véhicule.

En pratique, une pièce d'habillage est placée sur le montant vertical postérieur de l'encadrement de la porte avant et/ou sur le montant antérieur de l'encadrement de la porte arrière et/ou du montant postérieur.

L'opération de montage de l'enjoliveur est réalisée en bord de chaine de montage par un opérateur.

Traditionnellement, la pièce d'habillage est fixée par vissage.

Il s'agit d'une opération qui est délicate à réaliser car l'opérateur doit maintenir la pièce d'habillage et doit de plus manipuler des vis et contre écrou ainsi qu'une visseuse. Cette opération exige donc une grande dextérité de la part de l'opérateur.

Outre le fait qu'il s'agisse d'une opération très peu ergonomique, l'opération de montage d'un enjoliveur de montant de porte est, par ailleurs, relativement longue.

Il est par ailleurs connu du document FR 2 793 199 un ensemble de verrou destiné notamment à la fixation d'un siège pour véhicule automobile sur un plancher de ce véhicule.

Dans ce contexte technique, un but de l'invention est d'améliorer la pose et la fixation d'une pièce d'habillage sur une pièce de structure de véhicule.

Selon un premier aspect, l'invention concerne un organe de verrouillage d'une pièce d'habillage comprenant au moins une platine de réception, sur une pièce de structure d'un véhicule présentant au moins une zone de verrouillage dotée d'un perçage, l'organe de verrouillage comprenant une cage à l'intérieur de laquelle sont disposés des moyens de verrouillages mobiles entre une position de verrouillage dans laquelle les moyens de verrouillage dépassent radialement de la cage et une position de déverrouillage dans laquelle les moyens de verrouillage sont contenus dans ladite cage. L'organe de verrouillage comprend des moyens de maintien de l'organe de verrouillage dans la platine de réception dans une position de stockage et des moyens de positionnement de l'organe de verrouillage dans une position d'insertion dans le perçage de la pièce de structure. L'organe de verrouillage comprend une lame conçue pour venir en appui sur la zone de verrouillage et pour faire basculer l'organe de verrouillage pour l'orienter dans un axe permettant son engagement dans le perçage de la zone de verrouillage.

Selon d'autres dispositions prises individuellement ou en combinaison :
- l'organe de verrouillage comprend deux axes de rotation conçus pour venir en appui sur la platine de réception et au moins un crochet conçu pour venir s'encliqueter dans une nervure formée dans la pièce d'habillage.
- les axes de rotation et/ou la lame sont reliés à l'organe de verrouillage par des ponts de matière sécables ou déformables.
- l'organe de verrouillage comprend (i) la cage qui comprend une collerette ayant une ouverture centrale et deux montants sur chacun desquels est relié par une liaison sécable un axe de rotation et (ii) un noyau central présentant deux ailettes de verrouillage qui débordent radialement de la cage en position de verrouillage et qui sont rétractés à l'intérieur de la cage en position déverrouillage.
- la collerette est équipée de deux crochets disposés, de part et d'autre, de l'ouverture centrale.
- la tête comprend une empreinte destinée à coopérer avec un outil de mise en rotation et présente un contour ayant une partie semi circulaire et deux méplats orientés à 45°. L'ouverture centrale présente en forme de U a une partie semi circulaire dans laquelle se loge la partie semi circulaire de la tête et deux parties rectilignes contre lesquelles viennent respectivement s'appuyer les méplats.
- le noyau exerce une action élastique sur les ailettes de verrouillage en vue de la placer en position de verrouillage.

Selon un deuxième aspect, l'invention concerne une pièce d'habillage conçue pour être en applique contre une pièce de structure d'un véhicule présentant au moins une zone de verrouillage dotée d'un perçage. La pièce d'habillage comprend une paroi ayant une face d'aspect et une face technique sur laquelle est disposée une platine de réception d'un organe de verrouillage, la platine de réception ayant des moyens de maintien de l'organe de verrouillage dans une position de stockage.

Selon d'autres dispositions prises individuellement ou en combinaison :
- la pièce d'habillage présente un bord ourlé formé par un retour de matière pouvant être chaussé sur le bord de la pièce de structure.
- la platine de support comprend une chape de réception dans laquelle sont ménagés des paliers et la pièce d'habillage comprend une nervure disposée en surplomb de la chape de réception.
- la chape de réception est orientée selon un plan formant un angle compris entre 15° et 30° avec le plan principal de la pièce d'habillage.

Selon un troisième aspect, l'invention concerne une pièce de structure d'un véhicule automobile comprenant une partie centrale et un décrochement dans lequel est ménagée une zone de verrouillage comprenant une paroi de verrouillage dans laquelle est ménagé un perçage, la pièce de structure étant conçue pour recevoir une pièce d'habillage, le verrouillage de la pièce d'habillage sur la pièce de structure étant réalisé par un organe de verrouillage.

Selon d'autres dispositions prises préférées, la paroi de verrouillage est orientée selon un plan formant un angle compris entre 15° et 30° avec le plan principal de la pièce de structure.

Pour sa bonne compréhension, l'invention est décrite en référence aux dessins ci annexés représentant à titre d'exemple non limitatif
- La Figure 1 est une vue en perspective montrant une pièce d'habillage sur laquelle un organe de verrouillage est en phase d'approche ;
- Les figures 2 à 4 montrent une vue en perspective de la pièce d'habillage sur laquelle l'organe de verrouillage vient se mettre dans une position de stockage ;
- Les figures 5 à 7 montrent l'accostage et la rotation de l'organe de verrouillage vers la position de stockage ;
- Les figures 8 à 11 montrent en vue de coté la mise en place et le verrouillage de la pièce d'habillage sur une pièce de structure ;
- Les figures 12 à 17 montrent en coupe la mise en place et le verrouillage de la pièce d'habillage sur une pièce de structure ;
- Les figures 18 à 20 et 21 à 23 montrent respectivement en perspective et en vue de dessous l'organe de verrouillage en configuration d'utilisation dans ses positions verrouillée et déverrouillée ;
- Les figures 24 et 25 montrent en perspective l'organe de verrouillage dans ses positions verrouillée et déverrouillée.

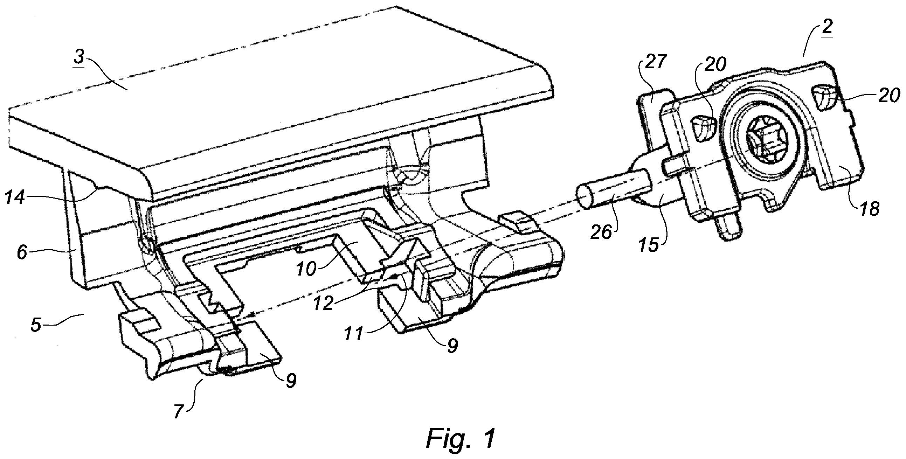

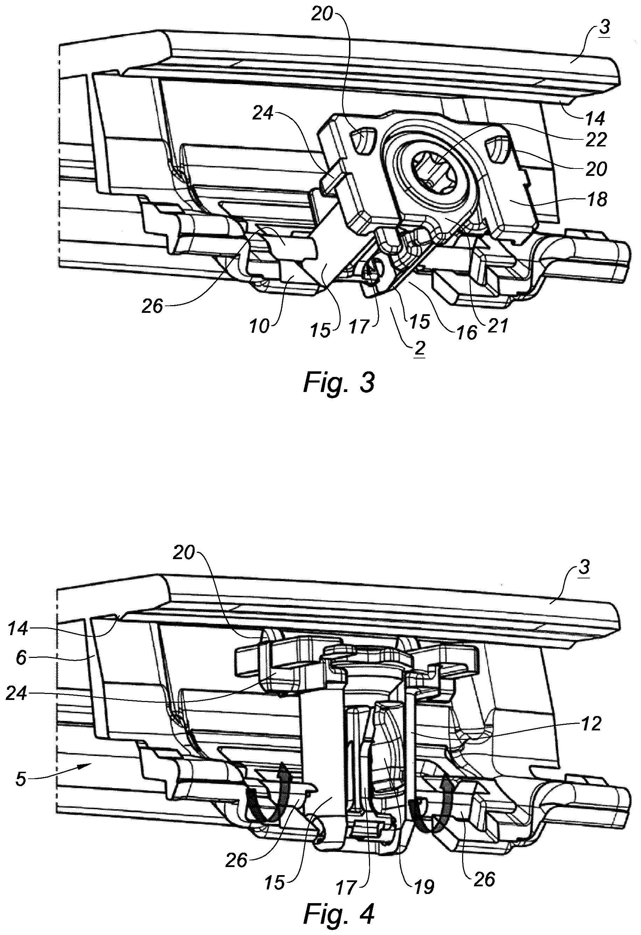

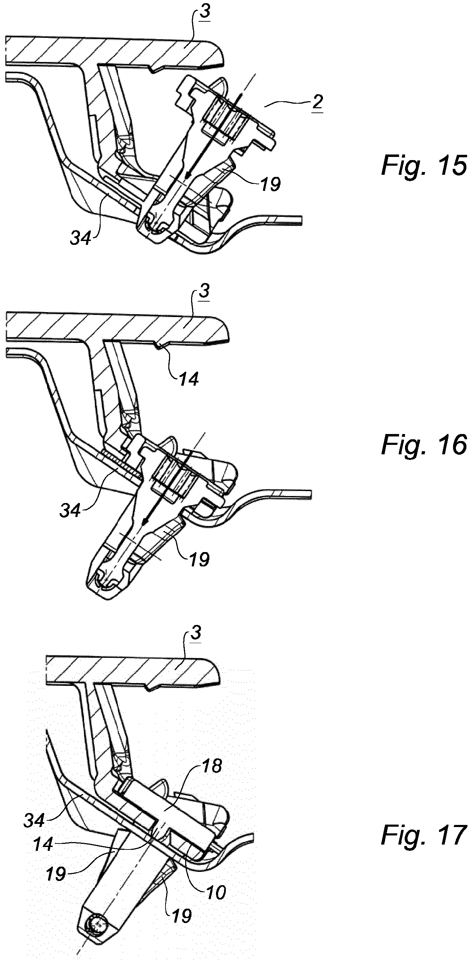

Les figures 1 à 17 représentent un équipement pour véhicule automobile comprenant un organe de verrouillage 2 et une pièce d'habillage 3 en matière plastique de type enjoliveur destinée à être mise en place et verrouillée sur une pièce de structure 4 d'un véhicule.

La pièce d'habillage 3 est représentée partiellement sur les figures mais il peut s'agir, à titre d'exemple non limitatif, d'une pièce d'habillage 3 d'un pied milieu d'un véhicule c'est-à-dire le composant vertical d'un véhicule qui s'étend entre la ceinture de caisse et le pavillon.

Dans le cas de figure où la pièce d'habillage 3 est une pièce d'habillage de montant de porte, il s'agit d'une pièce qui présente une paroi en matière plastique relativement longue et étroite qui est destinée à venir en doublure d'un montant métallique de porte avant et/ou arrière du véhicule. La pièce d'habillage 3 présente une face d'aspect qui est tournée vers l'extérieur du véhicule et une face technique qui reçoit les organes de liaison avec la structure du véhicule, et notamment une platine de support 5.

La platine de support 5, dans l'exemple montré sur les figures, est venue de moulage avec la pièce d'habillage 3. Dans d'autres formes de réalisation, la platine de support pourrait être un élément indépendant rapporté sur la face intérieure de la pièce d'habillage 3.

La platine de support 5 possède une paroi de liaison 6 qui est prolongée par une chape de réception 7. La chape de réception 7 dont la fonction est, comme on va le voir, d'accueillir l'organe de verrouillage 2 se situe ainsi dans un plan décalé par rapport à la pièce d'habillage 3 ; il est ainsi ménagé un espace d'accostage qui va permettre l'accostage de l'organe de verrouillage 2, sa mise en position de stockage et son positionnement final comme cela sera exposé plus loin.

La chape de réception 7 est orientée selon un plan incliné par rapport au plan de la pièce d'habillage 3 selon un angle aigu qui peut être de l'ordre de 15° à 30°.

La chape de réception 7 comprend deux branches 9 symétriques qui sont disposées à chaque extrémité de la paroi de support 6 qui délimitent entre elles un espace d'accostage pour l'organe de verrouillage 2.

Chacune des branches 9 de la chape de réception 7 présente une structure comprenant plusieurs surfaces fonctionnelles qui sont :
- une portée d'appui 10 qui s'étend sur trois cotés ;
- un palier 12 qui, dans le cas présent, est formé par une rainure 11 ménagée dans la portée d'appui. Le palier 12 est donc constitué par les arêtes formées par l'intersection de la portée d'appui 10 et la rainure 11.

On note, de plus, la présence d'une nervure 14 disposée sur la face interne de la pièce d'habillage 3. La nervure 14 est disposée en surplomb de la chape de réception 7 et est orientée de façon parallèle à la paroi de liaison 6.

L'organe de verrouillage 2 est du type général à quart de tour.

Dans l'exemple représenté sur les figures, l'organe de verrouillage 2 comprend une cage 16 à l'intérieur de laquelle sont logés des moyens de verrouillage.

La cage 16 présente, en partie supérieure, une collerette 18 de forme générale rectangulaire et deux montants 15 reliés à la collerette 18. La collerette 18 est dotée d'une ouverture centrale en forme de U qui est débouchante dans un des cotés longitudinaux de la collerette 18. L'ouverture de la collerette 18 est ainsi formée par une partie semi circulaire et deux parties rectilignes qui débouchent dans une des longueurs de la collerette 18.

De part et d'autre de l'ouverture centrale, la collerette 18 est équipée de deux crochets 20. Ces crochets 20 sont venus de moulage avec la collerette 18.

On note également la présence de deux nervures 24 qui s'étendent depuis la collerette 18 en direction des montants 15. Ces nervures 24 sont placées dans le plan de symétrie de l'organe de verrouillage 2 passant par les montants 15.

Comme on peut le voir sur les figures, la collerette 18 reçoit une patte 28 qui s'étend dans un plan perpendiculaire à l'axe de l'organe de verrouillage 2.

Dans le présent exemple, les moyens de verrouillage présentent :
- Un noyau central 17 duquel partent deux ailettes de verrouillage 19. Les ailettes de verrouillage 19 débordent radialement de la cage 16. Les ailettes de verrouillage 19 présentent une géométrie tridimensionnelle sensiblement triangulaire possédant une pointe formée par un petit coté et un grand coté, le petit coté étant en regard de la collerette 18 et formant un angle inférieur à 45° avec l'axe de l'organe de verrouillage 2 et le grand coté étant en regard du pied de l'organe de verrouillage 2 et formant avec l'axe l'organe de verrouillage 2 un angle supérieur à 45° pouvant être de préférence de l'ordre de 60° ;
- une tête 21 qui prolonge le noyau central 17. La tête 21 est pourvue d'une empreinte 22 destinée à coopérer avec un outil. La tête 21 inclut une empreinte 22 à six lobes dans l'exemple illustré sur les figures. Dans d'autres formes de réalisation la tête 21 pourrait être dotée d'une empreinte destinée à coopérer avec un outil à main tel qu'un tournevis. La tête 21 présente un contour ayant une partie semi circulaire pour venir se loger dans le fond de l'ouverture en U et une partie formée de deux méplats à 45°;
- en partie inférieure de l'organe de verrouillage 2, la cage 16 est pourvue de deux perçages dans chacun desquels est engagé un axe qui s'étend depuis le noyau central 17.

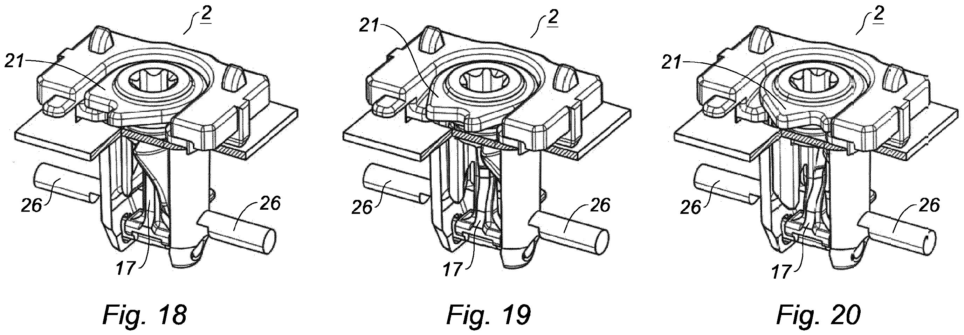

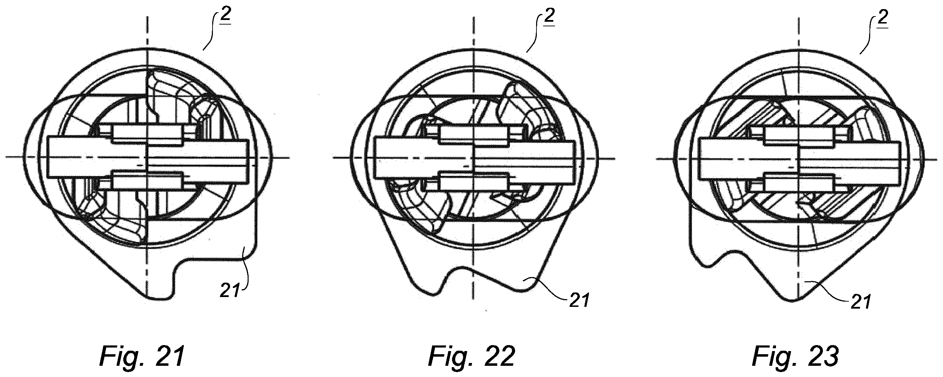

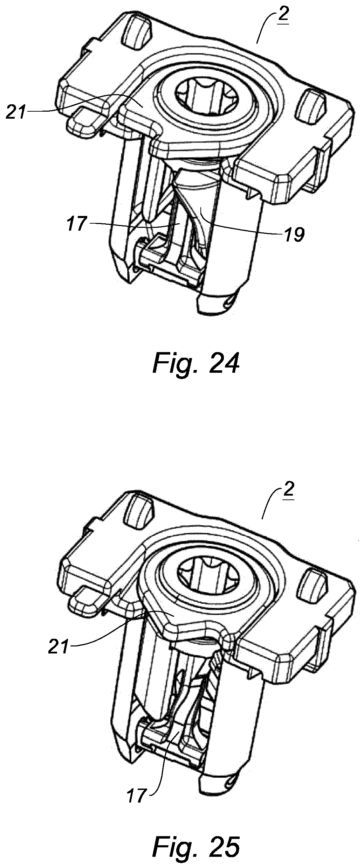

Le fonctionnement de l'organe de verrouillage 2 ici décrit repose sur la flexion élastique du noyau central 17. En d'autres termes, le noyau 17 maintient les ailettes de verrouillage 19 dans leur configuration déployée et, une action de rotation sur la tête 21 exercée par un outil approprié, fait pivoter les ailettes de verrouillage 19 à l'intérieur de la cage 16. L'action de rotation sur la tête 21 est bornée angulairement par les deux méplats qui assurent une course angulaire de 45°. On peut se reporter aux figures 18 à 25 pour apprécier le fonctionnement de l'organe de verrouillage.

L'organe de verrouillage 2 est de plus doté de deux axes de rotation 26 qui sont reliés chacun à la face externe d'un montant 15. Les axes de rotation 26 sont positionnés dans le plan de symétrie qui passe par les deux montants 15 et sont reliés aux montants 15 par un pont de matière aminci.

On note également la présence d'une lame 27 qui s'étend radialement depuis l'organe de verrouillage 2 dans un plan perpendiculaire au plan passant par les deux montants 15. Dans l'exemple de réalisation décrit sur les figures, la lame 27 est venue de moulage avec le noyau central 17 dans la partie basse de celui-ci et est reliée au noyau central par un pont de matière aminci.

L'organe de verrouillage 2 et la pièce d'habillage 3 (dont la platine de support 5 fait partie par moulage, dans l'exemple de réalisation décrit sur les figures,) sont donc deux éléments séparés qui coopèrent pour la fixation de la pièce d'habillage 3 sur un élément de structure d'un véhicule.

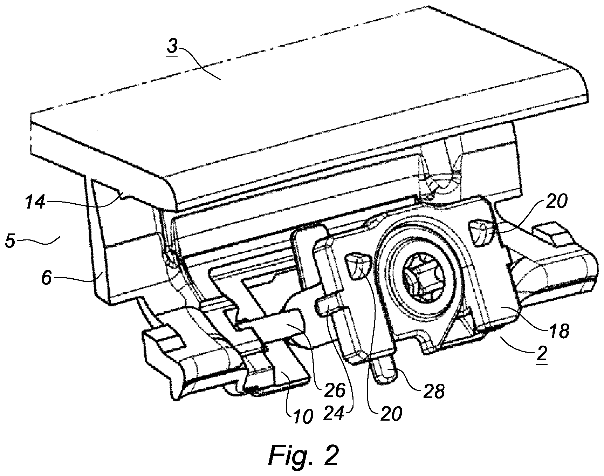

Les figures 1 et 2 montrent l'accostage de l'organe de verrouillage 2 sur la platine de support 5. Cette opération peut être réalisée manuellement par un opérateur. Le contact entre l'organe de verrouillage 2 et la platine de support 5 se fait par l'engagement des deux axes 26 dans les paliers 12 prévus dans les branches de la chape de réception 7. A ce stade, l'organe de verrouillage est libre en rotation par rapport à la platine de support 5.

L'organe de verrouillage 2 qui est posé sur les paliers 12 peut alors être basculé en direction de la paroi de liaison 6. L'opérateur en charge de cette tache peut s'aider pour cela de la patte 28 dont est pourvue la collerette 18.

En fin de course, les crochets 20 qui dépassent de la collerette 18 viennent s'encliqueter dans la nervure 14.

Dans cette configuration, l'organe de verrouillage 2 est retenu dans la pièce d'habillage 3 de façon stable; l'ensemble formé par la pièce d'habillage 3 et l'organe de verrouillage 2 peut être conditionné et transporté jusqu'à un poste en bord de ligne de montage de véhicules.

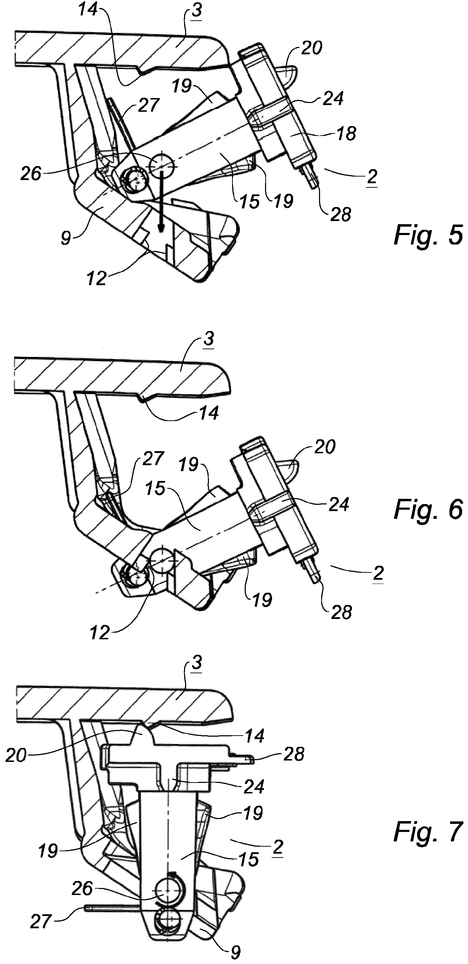

Il est à noter, comme on peut le voir en particulier sur la figure 7, que la lame 27 dépasse de la fenêtre de réception de la platine de support 5.

Il est entendu que la pièce d'habillage 3 est dotée d'une série de platines de support 5 qui embarquent chacune un organe de verrouillage 2.

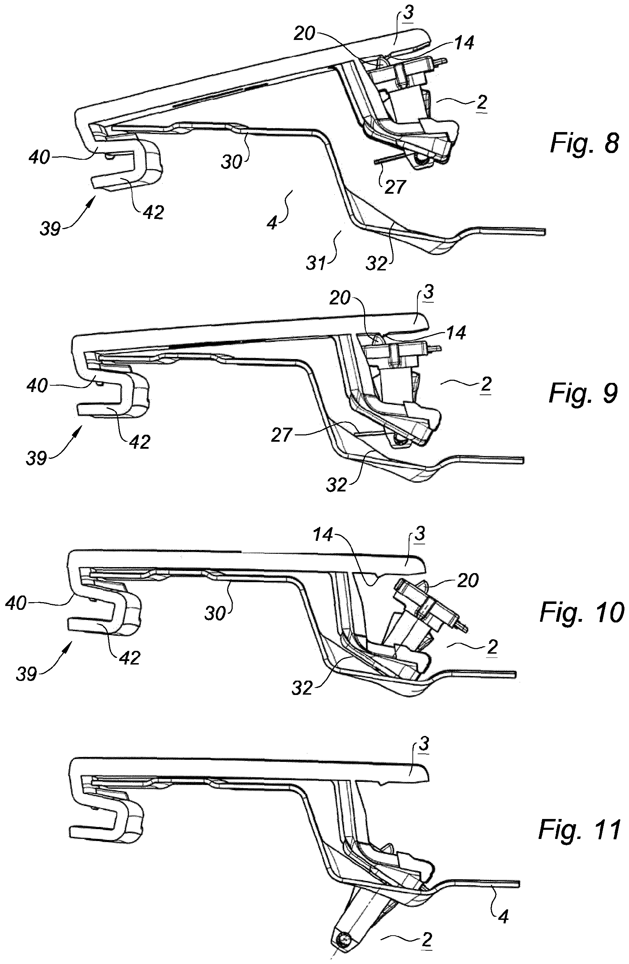

Les figures 8 à 11 et 12 à 17 montrent respectivement en vue de côté et en coupe les étapes de fixation de la pièce d'habillage 3 sur une pièce de structure 4 métallique d'un véhicule.

La pièce de structure 4 possède une partie centrale 30 sensiblement plane et un décrochement 31 dans lequel sont disposées des zones de verrouillage 32.

Par décrochement 31, on entend une partie emboutie qui se trouve dans un plan décalé de la partie centrale 30. Il est précisé que la pièce de structure est le plus souvent une pièce métallique mais elle pourrait également être une pièce en matière composite.

Les zones de verrouillage 32 sont ménagées dans le décrochement de la pièce de structure 4 et présentent une paroi de verrouillage 34 qui forme un angle aigu de l'ordre de 15° à 30° avec la partie principale de la pièce d'habillage 3 ; chaque zone de verrouillage 32 présente un perçage 36.

Comme on peut le voir sur les figures 8 à 11, la pièce d'habillage 3 peut présenter une bordure ourlée 39 comprenant un retour de matière 40. Dans la forme de réalisation montrée sur les figures 8 à 11, la bordure ourlée 39 peut présenter une forme en S comprenant un premier et un second retours 40 et 42 superposés, le second retour 42 pouvant être utilisé, par exemple, pour recevoir un joint.

La mise en place de la pièce d'habillage 3 se fait dans une première phase en chaussant la bordure ourlée 39 sur la bordure de la partie principale de la pièce de structure 4 comme on peut le voir sur la figure 8.

De cette manière, la pièce d'habillage 3 est positionnée dans un référentiel lié à la pièce de structure 4.

La pièce d'habillage 3 pivote pour venir en doublure de la pièce de structure 4.

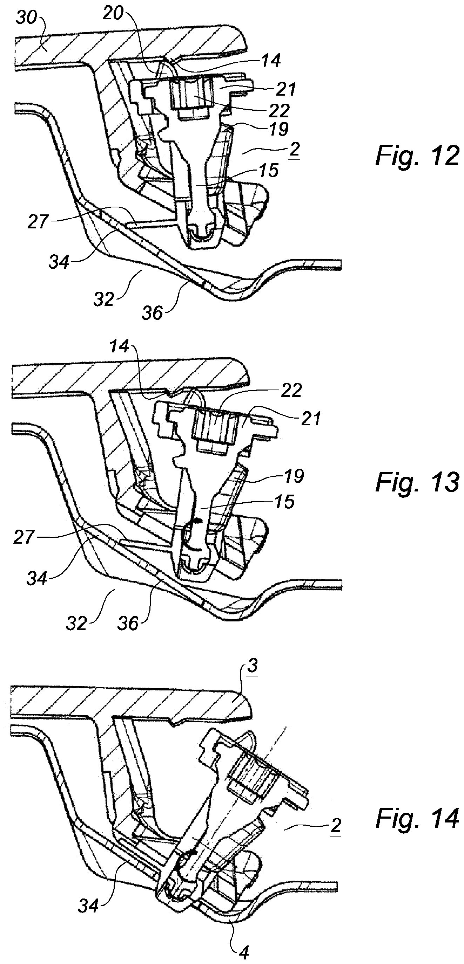

On peut se reporter aux figures 12 et 13 pour apprécier la manière avec laquelle se fait la fin de course de la pièce d'habillage 3.

En effet, la platine de support 5 (ainsi que l'organe de verrouillage 2 qui se trouve logé dans cette dernière) se rapprochant de la zone de verrouillage 32 de la pièce de structure 4, la lame 27 de l'organe de verrouillage 2 entre en contact avec la zone de verrouillage 32.

En poursuivant son mouvement vers la pièce de structure 4, la lame 27 entraine une rotation de l'organe de verrouillage 2. Il est important de noter que cette opération se fait de manière automatique sans intervention directe de l'opérateur (ou d'un bras de robot) ; la rotation de l'organe de verrouillage se fait uniquement par le rapprochement de la pièce d'habillage 3 vers la pièce de structure 4.

En fin de course comme le montre les figures 10 et 14, l'organe de verrouillage 2 se trouve dans une position sensiblement perpendiculaire à la zone de verrouillage 32 et en regard de l'ouverture de verrouillage 36. L'extrémité de l'organe de verrouillage 2 est partiellement engagée dans l'ouverture de verrouillage.

L'opérateur peut ensuite exercer une action manuelle en poussant sur l'organe de verrouillage 2 pour l'engager dans l'ouverture de verrouillage 36. Lors de cette poussée, la lame 27 et les axes de rotation 26 se séparent de l'organe de verrouillage 2 par rupture ou par déformation des ponts de matière qui les relient à l'organe de verrouillage 2. L'organe de verrouillage 2 peut poursuivre son engagement jusqu'à venir en appui contre la portée de la chape de réception 7 et jusqu'à ce que les ailettes de verrouillage 19 passent en arrière de la tôle qui forme la pièce de structure.

En fin de course, la collerette 18 vient se placer contre la portée d'appui 10 et les deux nervures 24 s'engagent dans les deux rainures 11 de la chape de réception.

La pièce d'habillage 3 est alors parfaitement fixée sur la pièce de structure 4.

Dans une autre forme de réalisation restant dans le cadre de la présente invention, l'organe de verrouillage 2 peut fonctionner selon un principe, par exemple, à baïonnettes. Dans ce cas de figure, l'opérateur serait amené à agir sur l'organe de verrouillage pour le mettre en rotation par exemple avec un outil à main et à l'amener dans sa position de verrouillage.

L'invention fournit ainsi une pièce d'habillage 3 et un organe de retenue qui peuvent être mis en place sur une pièce de structure 4 d'un véhicule au terme d'une opération effectuée de manière ergonomique et sans outil.

## Revendications

1. Organe de verrouillage (2) d'une pièce d'habillage (3) comprenant au moins une platine de réception (5), sur une pièce de structure (4) d'un véhicule présentant au moins une zone de verrouillage (32) dotée d'un perçage (36), l'organe de verrouillage (2) comprenant une cage (16) à l'intérieur de laquelle sont disposés des moyens de verrouillages mobiles entre une position de verrouillage dans laquelle les moyens de verrouillage dépassent radialement de la cage (16) et une position de déverrouillage dans laquelle les moyens de verrouillage sont contenus dans ladite cage (16), **caractérisé en ce que** l'organe de verrouillage (2) comprend des moyens de maintien de l'organe de verrouillage (2) dans la platine de réception (5) dans une position de stockage et des moyens de positionnement de l'organe de verrouillage (2) dans une position d'insertion dans le perçage de la pièce de structure (4), l'organe de verrouillage (2) comprenant une lame (27) conçue pour venir en appui sur la zone de verrouillage (32) et pour faire basculer l'organe de verrouillage (2) pour l'orienter dans un axe permettant son engagement dans le perçage (36) de la zone de verrouillage (32).

2. Organe de verrouillage (2) selon la revendication 1, **caractérisé en ce que** l'organe de verrouillage (2) comprend deux axes de rotation (26) conçus pour venir en appui sur la platine de réception (5) et au moins un crochet (20) conçu pour venir s'encliqueter dans une nervure (14) formée dans la pièce d'habillage (3).

3. Organe de verrouillage (2) selon l'une des revendications 1 ou 2, **caractérisé en ce que** les axes de rotation et/ou la lame (27) sont reliés à l'organe de verrouillage (2) par des ponts de matière sécables ou déformables.

4. Organe de verrouillage (2) selon l'une des revendications 2 ou 3, **caractérisé en ce que** l'organe de verrouillage (2) comprend (i) la cage (16) qui comprend une collerette (18) ayant une ouverture centrale et deux montants (15) sur chacun desquels est relié par une liaison sécable un axe de rotation (26) et (ii) un noyau central (17) présentant deux ailettes de verrouillage (19) qui débordent radialement de la cage (16) en position de verrouillage et qui sont rétractés à l'intérieur de la cage (16) en position déverrouillage.

5. Organe de verrouillage (2) selon la revendication 4, **caractérisé en ce que** la collerette (18) est équipée de deux crochets disposés, de part et d'autre, de l'ouverture centrale.

6. Organe de verrouillage (2) selon l'une des revendications 4 à 5, **caractérisé en ce que** le noyau central (17) est prolongé par une tête (21) qui comprend une empreinte (22) destinée à coopérer avec un outil de mise en rotation et présente un contour ayant une partie semi circulaire et deux méplats orientés à 45°, et **en ce que** l'ouverture centrale présente en forme de U ayant une partie semi circulaire dans laquelle se loge la partie semi circulaire de la tête (21) et deux parties rectilignes contre lesquelles viennent respectivement s'appuyer les méplats.

7. Organe de verrouillage (2) selon l'une des revendications 4 à 6, **caractérisé en ce que** le noyau exerce une action élastique sur les ailettes de verrouillage (19) en vue de la placer en position de verrouillage.

8. Pièce d'habillage (3) conçue pour être en applique contre une pièce de structure (4) d'un véhicule présentant au moins une zone de verrouillage (32) dotée d'un perçage, **caractérisée en ce que** la pièce d'habillage (3) comprend une paroi ayant une face d'aspect et une face technique sur laquelle est disposée une platine de réception d'un organe de verrouillage (2) selon l'une des revendications 1 à 7, la platine de réception (5) ayant des moyens de maintien de l'organe de verrouillage (2) dans une position de stockage.

9. Pièce d'habillage (3) selon la revendication 8, **caractérisée en ce que** la pièce d'habillage (3) présente un bord ourlé (39) formé par un retour de matière (40) pouvant être chaussé sur le bord de la pièce de structure (4).

10. Pièce d'habillage (3) selon l'une des revendications 8 à 9, **caractérisée en ce que** la platine de support (5) comprend une chape de réception (7) dans laquelle sont ménagés des paliers (12) et, **en ce que** la pièce d'habillage (3) comprend une nervure (14) disposée en surplomb de la chape de réception (7).

11. Pièce d'habillage selon (3) selon l'une des revendications 8 à 9, **caractérisée en ce que** la chape de réception (7) est orientée selon un plan formant un angle compris entre 15° et 30° avec le plan principal de la pièce d'habillage (3).

12. Pièce de structure (4) d'un véhicule automobile comprenant une partie centrale (30) et un décrochement (31) dans lequel est ménagée une zone de verrouillage (32) comprenant une paroi de verrouillage (34) dans laquelle est ménagé un perçage (36), la pièce de structure (4) étant recouverte d'une pièce d'habillage (3) selon l'une des revendications 8 à 11, la pièce d'habillage (3) étant verrouillée sur la pièce de structure (2) au moyen d'un organe de verrouillage selon l'une des revendications 1 à 7.

13. Pièce de structure (4) selon la revendication 12, **caractérisée en ce que** la paroi de verrouillage (34) est orientée selon un plan formant un angle compris entre 15° et 30° avec le plan principal de la pièce de structure (4).

## Patentansprüche

1. Verriegelungsorgan (2) eines Verkleidungselements (3), das mindestens eine Aufnahmeplatte (5) umfasst, auf einem Strukturelement (4) eines Fahrzeugs, das mindestens eine Verriegelungszone (32) aufweist, die mit einer Bohrung (36) versehen ist, wobei das Verriegelungsorgan (2) einen Käfig (16) umfasst, im Inneren dessen Verriegelungsmittel angeordnet sind, die zwischen einer Verriegelungsposition, in der die Verriegelungsmittel radial aus dem Käfig (16) überstehen, und einer Entriegelungsposition, in der die Verriegelungsmittel in dem Käfig (16) enthalten sind, beweglich sind, **dadurch gekennzeichnet, dass** das Verriegelungsorgan (2) Mittel zum Halten des Verriegelungsorgans (2) an der Aufnahmeplatte (5) in einer Ablageposition und Mittel zum Positionieren des Verriegelungsorgans (2) in einer Einführungsposition in der Bohrung des Strukturelements (4) umfasst, wobei das Verriegelungsorgan (2) eine Lamelle (27) umfasst, die gestaltet ist, um sich in der Verriegelungszone (32) anzulegen und um das Verriegelungsorgan (2) schwenken zu lassen, um es in einer Achse auszurichten, die deren Einsatz in der Bohrung (36) der Verriegelungszone (32) erlaubt.

2. Verriegelungsorgan (2) nach Anspruch 1, **dadurch gekennzeichnet, dass** das Verriegelungsorgan (2) zwei Drehachsen (26) umfasst, die gestaltet sind, um sich an der Aufnahmeplatte (5) anzulegen, und mindestens einen Haken (20), der gestaltet ist, um in eine Sicke (14) einzurasten, die in dem Verkleidungselement (3) gebildet ist.

3. Verriegelungsorgan (2) nach einem der Ansprüche 1 oder 2, **dadurch gekennzeichnet, dass** die Drehachsen und/oder die Lamelle (27) durch teilbare oder verformbare Materialbrücken mit dem Verriegelungsorgan (2) verbunden sind.

4. Verriegelungsorgan (2) nach einem der Ansprüche 2 oder 3, **dadurch gekennzeichnet, dass** das Verriegelungsorgan (2) (i) den Käfig (16) umfasst, der einen Kragen (18) umfasst, der eine zentrale Öffnung und zwei Stützen (15) aufweist, wobei an jeder davon eine Drehachse (26) durch eine teilbare Verbindung verbunden ist, und (ii) einen mittleren Kern (17), der zwei Verriegelungsflügel (19) aufweist, die in Verriegelungsposition radial aus dem Käfig (16) überstehen, und die in Entriegelungsposition ins Innere des Käfigs (16) eingezogen sind.

5. Verriegelungsorgan (2) nach Anspruch 4, **dadurch gekennzeichnet, dass** der Kragen (18) mit zwei Haken ausgestattet ist, die beiderseits der mittigen Öffnung angeordnet sind.

6. Verriegelungsorgan (2) nach einem der Ansprüche 4 bis 5, **dadurch gekennzeichnet, dass** der mittlere Kern (17) durch einen Kopf (21) verlängert wird, der einen Abdruck (22) umfasst, der dazu bestimmt ist, mit einem Drehantriebsinstrument zusammenzuwirken und eine Kontur aufweist, die einen halbreisförmigen Teil und zwei Abflachungen aufweist, die auf 45° ausgerichtet sind, und dadurch, dass die mittige Öffnung eine U-Form aufweist, die einen halbkreisförmigen Teil aufweist, in dem der halbkreisförmige Teil des Kopfes (21) aufgenommen ist, und zwei geradlinige Teile, an denen sich jeweils die Abflachungen anlegen.

7. Verriegelungsorgan (2) nach einem der Ansprüche 4 bis 6, **dadurch gekennzeichnet, dass** der Kern eine elastische Wirkung auf die Verriegelungsflügel (19) ausübt, um sie in Verriegelungsposition zu positionieren.

8. Verkleidungselement (3), das gestaltet ist, um auf Anlage an einem Strukturelement (4) eines Fahrzeugs zu sein, das mindestens eine Verriegelungszone (32) aufweist, die mit einer Bohrung versehen ist, **dadurch gekennzeichnet, dass** das Verkleidungselement (3) eine Wand umfasst, die eine Ansichtsseite und eine technische Seite aufweist, auf der eine Aufnahmeplatte eines Verriegelungsorgans (2) nach einem der Ansprüche 1 bis 7 angeordnet ist, wobei die Aufnahmeplatte (5) Haltemittel des Verriegelungsorgans (2) in einer Ablageposition aufweist.

9. Verkleidungselement (3) nach Anspruch 8, **dadurch gekennzeichnet, dass** das Verkleidungselement (3) einen gesäumten Rand (39) aufweist, der durch eine Materialrückführung (40) gebildet wird, der auf den Rand des Strukturelements (4) aufgezogen werden kann.

10. Verkleidungselement (3) nach einem der Ansprüche 8 bis 9, **dadurch gekennzeichnet, dass** die Aufnahmeplatte (5) einen Aufnahmebock (7) umfasst, in dem Absätze (12) eingerichtet sind, und dadurch, dass das Verkleidungselement (3) eine Sicke (14) umfasst, die über den Aufnahmebock (7) überhängend angeordnet ist.

11. Verkleidungselement (3) nach einem der Ansprüche 8 bis 9, **dadurch gekennzeichnet, dass** der Aufnahmebock (7) entlang einer Ebene ausgerichtet ist, die einen Winkel, der zwischen 15° und 30° enthalten ist, mit der Hauptebene des Verkleidungselements (3) bildet.

12. Strukturelement (4) eines Kraftfahrzeugs, einen mittleren Teil (30) und einen Absatz (31) umfassend, in dem eine Verriegelungszone (32) eingerichtet ist, die eine Verriegelungswand (34) umfasst, in der eine Bohrung (36) eingerichtet ist, wobei das Strukturelement (4) mit einem Verkleidungselement (3) nach einem der Ansprüche 8 bis 11 überzogen ist, wobei das Verkleidungselement (3) anhand eines Verriegelungsorgans nach einem der Ansprüche 1 bis 7 auf dem Strukturelement (2) verriegelt ist.

13. Strukturelement (4) nach Anspruch 12, **dadurch gekennzeichnet, dass** die Verriegelungswand (34) entlang einer Ebene ausgerichtet ist, die einen Winkel, der zwischen 15° und 30° enthalten ist, mit der Hauptebene des Strukturelements (4) bildet.

## Claims

1. A locking member (2) of a trim part (3) comprising at least one receiving plate (5), on a structural part (4) of a vehicle having at least one locking zone (32) provided with a bore (36), the locking member (2) comprising a cage (16) inside which are disposed locking means movable between a locking position in which the locking means project radially from the cage (16) and an unlocking position in which the locking means are contained in said cage (16), **characterized in that** the locking member (2) comprises means for holding the locking member (2) in the receiving plate (5) in a storage position and means for positioning the locking member (2) in an insertion position in the bore of the structural part (4), the locking member (2) comprising a blade (27) designed to bear on the locking zone (32) and to tilt the locking member (2) to orient it in an axis allowing its engagement in the bore (36) of the locking zone (32).

2. The locking member (2) according to claim 1, **characterized in that** the locking member (2) comprises two axes of rotation (26) designed to bear on the receiving plate (5) and at least one hook (20) designed to snap-fit into a rib (14) formed in the trim part (3).

3. The locking member (2) according to any of claims 1 or 2, **characterized in that** the axes of rotation and/or the blade (27) are connected to the locking member (2) by bridges of breakable or deformable material.

4. The locking member (2) according to any of claims 2 or 3, **characterized in that** the locking member (2) comprises (i) the cage (16) which comprises a collar (18) having a central opening and two uprights (15) on each of which is connected by a breakable connection an axis of rotation (26) and (ii) a central core (17) having two locking fins (19) which project radially from the cage (16) in the locking position and which are retracted inside the cage (16) in the unlocked position.

5. The locking member (2) according to claim 4, **characterized in that** the collar (18) is equipped with two hooks disposed on either side of the central opening.

6. The locking member (2) according to any of claims 4 to 5, **characterized in that** the central core (17) is extended by a head (21) which comprises a recess (22) intended to cooperate with a rotating tool and has a contour having a semi-circular portion and two flat sections oriented at 45°, and **in that** the central opening is U-shaped having a semi-circular portion in which the semi-circular portion of the head is housed (21) and two rectilinear portions against which the flat sections respectively bear.

7. The locking member (2) according to any of claims 4 to 6, **characterized in that** the core exerts an elastic action on the locking fins (19) in order to place it in the locking position.

8. A trim part (3) designed to be applied against a structural part (4) of a vehicle having at least one locking zone (32) provided with a bore, **characterized in that** the trim part (3) comprises a wall having an appearance face and a technical face on which is disposed a receiving plate of a locking member (2) according to any of claims 1 to 7, the receiving plate (5) having means for holding the locking member (2) in a storage position.

9. The trim part (3) according to claim 8, **characterized in that** the trim part (3) has a hemmed edge (39) formed by a material return (40) which can be fitted on the edge of the structural part (4).

10. The trim part (3) according to any of claims 8 to 9, **characterized in that** the support plate (5) comprises a receiving yoke (7) in which are formed bearings (12) and, **in that** the covering part (3) comprises a rib (14) disposed overhanging the receiving yoke (7).

11. The trim part (3) according to any of claims 8 to 9, **characterized in that** the receiving yoke (7) is oriented along a plane forming an angle comprised between 15° and 30° with the main plane of the trim part (3).

12. A structural part (4) of a motor vehicle comprising a central portion (30) and a recess (31) in which is formed a locking zone (32) comprising a locking wall (34) in which is formed a bore (36), the structural part (4) being covered with a trim part (3) according to any of claims 8 to 11, the trim part (3) being locked on the structural part ( 2) by means of a locking member according to any of claims 1 to 7.

13. The structural part (4) according to claim 12, **characterized in that** the locking wall (34) is oriented along a plane forming an angle comprised between 15° and 30° with the main plane of the structural part (4).
